# EUROPÄISCHE PATENTSCHRIFT

(11) **EP 3 380 220 B1**
(45) Veröffentlichungstag und Bekanntmachung des Hinweises auf die Patenterteilung: **09.06.2021**
(21) Anmeldenummer: 16716159.5
(22) Anmeldetag: 03.03.2016
(51) Int. Cl.: B01F 15/00, B01F 15/02, B01F 3/12, B01F 7/16, F16K 1/36, F16K 27/02, F16K 31/122, F16K 41/00

(54) **EINLAUFVENTIL, MISCHVORRICHTUNG UND STEUERVERFAHREN ZUR EINBRINGUNG EINES PULVERFÖRMIGEN STOFFES IN EINE FLÜSSIGKEIT**
INLET VALVE, MIXING DEVICE AND CONTROL METHOD FOR INTRODUCING A POWDERY SUBSTANCE INTO A LIQUID
SOUPAPE D'ALIMENTATION, DISPOSITIF MÉLANGEUR ET PROCÉDÉ DE COMMANDE POUR L'INTRODUCTION D'UNE SUBSTANCE PULVÉRULENTE DANS UN LIQUIDE

(30) Priorität: 23.11.2015 DE 102015015033; 23.12.2015 DE 102015016766
(43) Veröffentlichungstag der Anmeldung: 03.10.2018
(73) Patentinhaber: GEA TDS GmbH, 31157 Sarstedt (DE)
(72) Erfinder: MORK NIELSEN, Mikkel, 8000 Aarhus C (DK); MARCUSSEN, Torben, 8362 Horning (DK); DARRÉ, Bjarne, 8660 Skanderborg (DK); SCHWENZOW, Uwe, 48683 Ahaus (DE)
(74) Vertreter: Hauck Patentanwaltspartnerschaft mbB
(86) Internationale Anmeldenummer: PCT/EP2016/000369
(87) Internationale Veröffentlichungsnummer: WO 2017/088938

(56) Entgegenhaltungen:
- EP-A1- 1 522 775
- AU-B2- 420 993
- DE-A1-102011 007 336
- DE-B1- 2 538 768
- DE-U1- 29 917 365
- JP-A- S58 205 528
- JP-A- 2010 151 290
- US-A- 3 425 667

## Beschreibung

### TECHNISCHES GEBIET

Die Erfindung betrifft ein Einlaufventil zur Einbringung eines pulverförmigen Stoffes in eine in einem Behälter einer Mischvorrichtung vorgelegte Flüssigkeit eine Vorrichtung zur Einbringung eines pulverförmigen Stoffes in eine Flüssigkeit und ein Verfahren zur Steuerung der Einbringung eines pulverförmigen Stoffes.

### STAND DER TECHNIK

Es sind Mischvorrichtungen bekannt, sog. Vakuummischer, die einen Behälter mit einer Rühreinrichtung aufweisen, in dem eine Flüssigkeit vorgelegt ist, die mit einem pulverförmigen Stoff vermischt wird. Die freie Oberfläche der Flüssigkeit, die in dem Behälter beispielsweise einen Flüssigkeitsstand mit einer Höhe zwischen 0,4 bis 4 m aufweisen kann, unterliegt dabei einem diesem Höhenbereich entsprechend zugeordneten Unterdruck gegenüber Atmosphärendruck von beispielsweise 0,2 bis 0,8 bar, damit die Flüssigkeit insbesondere im Bodenbereich des Behälters unter allen Betriebsbedingungen einen Unterdruck gegenüber Atmosphärendruck aufweist.

Der Behälter besteht in der Regel aus einem im Wesentlichen zylindrischen Behältermantel und einem oberen und einem unteren Behälterboden. Der untere Behälterboden kann dabei vorzugsweise konisch, d.h. sich nach unten verjüngend, insbesondere als Kegel, ausgeführt sein. Die Einleitung des pulverförmigen Stoffes in den Behälter erfolgt über eine Öffnung in der Behälterwandung, vorzugsweise entweder an der tiefsten Stelle des vorzugsweise zylindrischen Behältermantels oder, bei sich nach unten verjüngendem Behälterboden, vorzugsweise im oberen Bereich dieses Behälterbodens. Diese Öffnung setzt sich in einem rohrförmigen Eintrittsstutzen in Richtung der Außenseite des Behälters fort, an den eine zu einem Pulvervorratsbehälter führende Rohrleitung angeschlossen ist. Der Eintrittsstutzen und damit die Rohrleitung sind absperrbar ausgebildet, damit einerseits die Mischvorrichtung über diesen Weg gegenüber ihrer Umgebung abgeschlossen werden und damit andererseits eine im Pulvervorratsbehälter vorgelegte Menge des pulverförmigen Stoffes im Bedarfsfalle der Flüssigkeit zugeführt werden kann. Es handelt sich im Regelfall um ein sog. Batch-Verfahren, bei dem die vorgelegte Menge Pulver der im erforderlichen Mischungsverhältnis in der Mischvorrichtung bereitgestellten Flüssigkeitsmenge zugemischt und im Regelfall mittels einer Rühreinrichtung mit dieser vermischt wird.

Im Eintrittsstutzen ist zur Steuerung der Zufuhr des pulverförmigen Stoffes bislang ein als Absperrventil fungierendes Scheiben- oder Kugelventil angeordnet. Aufgrund der Bauweise eines Scheiben- oder Kugelventils befindet sich der Ventilsitz in einem durch die jeweilige Schließgliedkonfiguration und Kinematik bedingten mehr oder weniger großen Abstand von der Behälterinnenwand, sodass dadurch im Eintrittsstutzen bis zum jeweiligen Ventilsitz ein Totraum gebildet wird. In diesem Totraum kann sich Pulver festsetzen und dort blockierend verbleiben, das durch die Wirkung der Rühreinrichtung nicht oder nur unzureichend erfasst wird. Diese Gefahr besteht insbesondere dann, wenn sich der Eintrittsstutzen im sich nach unten verjüngenden Behälterboden befindet und diese Anordnung bis zum Ventilsitz des jeweiligen Ventils ggf. einen Sumpf bildet.

Bei Scheiben- und Kugelventilen ist außerdem von Nachteil, dass die notwendigen Sitzdichtungen gehäuseseitig angeordnet und somit stets der voll ausgebildeten Rohrströmung ausgesetzt sind. Die Sitzdichtungen werden dadurch in exponierter Weise von den teilweise sehr abrasiven Pulvern, wie beispielsweise Lactose, beaufschlagt und unterliegen dadurch einem erhöhten Verschleiß. Auf diesen Sachverhalt weist beispielsweise eine Veröffentlichung im Internet der TYCO International Ltd., tyco flow control, Hygenic Products UPODATE, im Zusammenhang mit einem F250 Powder SKI-JUMP® Valve hin. Eine ringförmig am Ventilgehäuse dieses Scheibenventils ausgebildete, der Sitzdichtung in Strömungsrichtung des Pulvers vorgeordnete Rampe ("Skischanze") lenkt die abrasiven Pulverteilchen über den Gummisitz, wodurch der Verschleiß des Gummisitzes verringert werden soll.

Beiden Ventilbauarten, den Scheiben- und Kugelventilen, ist weiterhin gemein, dass das Pulver bei geschlossenem Ventil, in Transportrichtung des Pulvers gesehen, vor dem jeweiligen Schließglied liegt, sich dort zusammenballen und damit die Zufuhr und den Eintritt in den Behälter blockieren kann. Um die verschlissene jeweilige Sitzdichtung austauschen zu können, ist ein Ausbau des jeweiligen Ventils aus der Rohrleitung, in der es angeordnet ist, erforderlich. Bei Scheibenventilen ist zusätzlich von Nachteil, dass sich das scheibenförmige Schließglied im Strömungsweg der Pulverströmung befindet und somit ein zusätzliches Hindernis darstellt.

DE 10 2011 007 336 A1 offenbart ein Einlaufventil mit Behälter und Steuervorrichtung mit einigen Merkmalen des Anspruchs 1 und ein entsprechendes Verfahren inigen Merkmalen des Anspruchs 6.

Es ist Aufgabe der vorliegenden Erfindung, zumindest ein Einlaufventil zur Einbringung eines pulverförmigen Stoffes in eine in einem Behälter einer Mischvorrichtung vorgelegten Flüssigkeit, eine Vorrichtung zur Einbringung eines pulverförmigen Stoffes in eine Flüssigkeit, und ein Verfahren zur Steuerung der Einbringung eines pulverförmigen Stoffes in eine Flüssigkeit bereitzustellen, dass eine Totraumbildung im Bereich der Innenwandung des Behälters an der Eintrittsstelle für das Pulver und Zusammenballungen und Blockaden des Pulvers an der Eintrittsstelle und im Einlaufventil vermieden und eine betriebssichere und störungsfreie Einbringung des Pulvers in die Flüssigkeit und eine einfache Anpassung an unterschiedliche pulverförmige Stoffe sichergestellt werden. Darüber hinaus wird mit der Ausgestaltung des Einlaufventils eine verschleißarme und austauschfreundliche Anordnung der Sitzdichtung angestrebt.

### ZUSAMMENFASSUNG DER ERFINDUNG

Diese Aufgabe wird in vorrichtungstechnischer Sicht durch das Einlaufventil zur Einbringung eines pulverförmigen Stoffes in eine Flüssigkeit mit den Merkmalen des Anspruchs 1 und durch eine Vorrichtung zur Einbringung eines pulverförmigen Stoffes in eine Flüssigkeit mit den Merkmalen des Anspruchs 5 gelöst. Ferner wird die Aufgabe in verfahrenstechnischer Hinsicht durch das Verfahren zur Steuerung der Einbringung eines pulverförmigen Stoffes in eine Flüssigkeit mit den Merkmalen des Anspruchs 6 gelöst.

Erfindungsgemäß wird erstmals ein Einlaufventil zur Einbringung eines pulverförmigen Stoffes in eine in einem Behälter einer Mischvorrichtung vorgelegte Flüssigkeit vorgeschlagen, das als Hubventil ausgebildet ist, wobei der Behälter aus einem vorzugsweise zylindrischen Behältermantel und einem oberen und unteren Behälterboden besteht. Der untere Behälterboden ist vorzugsweise sich nach untern verjüngend, vorzugsweise konisch oder kegelförmig, ausgebildet und schließt sich an den Behältermantel übergangslos an. An dem Behältermantel oder dem Behälterboden ist ein Ventilgehäuse des Einlaufventils mit einem Ventilschließglied angeordnet. Das Ventilgehäuse weist einen Ventilsitz auf, der mit einem Ventilteller des Ventilschließgliedes zusammenwirkt. Der Ventilsitz bildet eine Sitzöffnung aus, durch welche der pulverförmige Stoff in die Flüssigkeit eingebracht wird. Die Sitzöffnung ist mit dem Ventilteller zwischen vollständig geschlossen oder vollständig geöffnet einstellbar, d.h. es ist eine Schließstellung oder eine vollständige Offenstellung realisierbar. Die Sitzöffnung ist in und fluchtend mit einem Erstreckungsbereich einer Wandung des Behältermantels oder des Behälterbodens angeordnet. Dies bedeutet konkret, dass der Ventilsitz und damit die von diesem ausgebildete Sitzöffnung weitestgehend bündig mit der Innenwandung des Behältermantels oder des sich nach unten verjüngenden Behälterbodens abschließt. Dem Einlaufventil ist eine Steuereinrichtung zugeordnet, über die das Ventilschließglied in die Schließ- oder in die Offenstellung überführbar ist. Die Steuereinrichtung weist wenigstens einen Signalaufnehmer auf, der eine Messeinrichtung ist für die Mischparameter
- Zusammensetzung und Beschaffenheit des pulverförmigen Stoffes,
- Durchfluss des pulverförmigen Stoffes im Einlaufventil,
- Druck im Behälter der Mischvorrichtung im Bereich der Sitzöffnung,
- und/oder Temperatur der Flüssigkeit.

Die Messung des vorgenannten Druckes kann mittelbar im Kopfraum des Behälters oberhalb des Flüssigkeitsspiegels oder unmittelbar im Bereich der Sitzöffnung vorgenommen werden. Die Schließ- oder die Offenstellung des Einlaufventils ist bei der Einbringung des pulverförmigen Stoffes in Abhängigkeit von den Mischparametern ansteuerbar.

Um zu erreichen, dass die Sitzöffnung möglichst bündig mit der Innenwandung des Behältermantels oder des sich vorzugsweise nach unten verjüngenden Behälterbodens abschließt, wird eine Weiterbildung des Einlaufventils vorgeschlagen, bei der das behälterseitige Ende der Sitzöffnung senkrecht zur Hubrichtung des Einlaufventils orientiert ist und bündig mit der Innenseite der Wandung des Behältermantels oder des Behälterbodens abschließt. Dabei ist der bündige Abschluss des behälterseitigen Endes der Sitzöffnung so zu verstehen, dass dieses Ende einen integralen Teil der Innenkontur der Behälterwandung in diesem Bereich darstellt, wobei die Kontaktfläche zwischen Sitzöffnung und zugeordneter Sitzdichtung im Ventilschließglied so nah wie konstruktiv möglich an das Ende der Sitzöffnung herangeführt wird.

Die vorgenannte Anordnung ist auch mit einem Ventilsitz ausführbar, bei dem Ventilsitz und Ventilschließglied ohne eine diskrete Sitzdichtung gegeneinander abdichten. Dies kann eine Paarung Metall auf Metall sein oder ein metallischer Ventilsitz, der mit einem Ventilschließglied zusammenwirkt, das abdichtende Eigenschaften besitzt (geeigneter Kunststoff). Wesentlich ist auch hier, dass die Kontaktfläche zwischen Sitzöffnung und einer zugeordneten Abdichtfläche am Ventilschließglied so nah wie konstruktiv möglich an das Ende der Sitzöffnung herangeführt wird.

Eine weitere vorteilhafte Ausgestaltung des Einlaufventils sieht vor, dass ein die Sitzöffnung aufnehmender Teil des Ventilgehäuses radial außenseits von einem scheibenförmigen Anschlusselement umschlossen ist oder sich in dieses Anschlusselement erweitert, wobei sich das Anschlusselement in der Ebene der Sitzöffnung und senkrecht zur Hubrichtung des Einlaufventils erstreckt. Das Anschlusselement ist somit einerseits ein radialer Außenteil des Ventilgehäuses, in dem die Sitzöffnung ausgebildet ist, und andererseits fungiert es vorteilhaft als Einschweißteil zur Einbringung in die Wandung des Behälters und wird somit integraler Teil dieser Wandung.

Eine andere Weiterbildung des Anschlusselementes sieht vor, dass eine dem Innenraum des Behälters zugewandte Stirnfläche des scheibenförmigen Anschlusselements mit der Innenseite der Wandung des Behältermantels oder des Behälterbodens bündig und fluchtend abschließt. Dieser behälterinnenseitige Abschluss und die mit der Innenwandung fluchtende Ausrichtung vermeidet eine Totraumbildung in diesem Bereich und der Ventilsitz mit seiner Sitzöffnung und der zugeordneten Sitzdichtung im Ventilschließglied wird, soweit dies überhaupt möglich ist, nicht nur an den Erstreckungsbereich der Wandung herangeführt, sondern in diesem positioniert.

Um sicherzustellen, dass keine Tot- und Hohlräume im Ventilgehäuse vorliegen, wird erfindungsgemäss vorgeschlagen, dass das Ventilschließglied zumindest in seinem pulverbeaufschlagten Bereich als durchmessergleiche zylindrische Stange ausgebildet ist, an der durchmessergleich der Ventilteller angeformt ist. Dies bedeutet, dass der Ventilteller übergangslos und durchmessergleich an die zylindrische Stange anschließt. Wenn sich das Einlaufventil in seiner vollen Offenstellung befindet, ist das Ventilschließglied mit seinem Ventilteller aufgrund dieser Ausführungsform weitestgehend aus der voll ausgebildeten Strömung des pulverförmigen Stoffes herausgefahren, sodass es einerseits kein Strömungshindernis darstellt und andererseits liegt eine Sitzdichtung, die in dem Ventilteller Aufnahme findet, in der Nähe der Wandung des Ventilgehäuses und damit außerhalb des voll ausgebildeten Strömungsbereichs der Rohrströmung und wird dadurch allenfalls nur von der wandnahen, stagnierenden Strömung in diesem Randbereich tangiert.

Erfindungsgemäß weist die Vorrichtung zur Einbringung eines pulverförmigen Stoffes in eine Flüssigkeit ein Einlaufventil mit den vorstehend beschriebenen Merkmalen auf.

In verfahrenstechnischer Hinsicht wird die Aufgabe durch das erfindungsgemäße Verfahren zur Steuerung der Einbringung eines pulverförmigen Stoffes in eine Flüssigkeit gelöst. Der pulverförmigen Stoff wird in die in einem Behälter einer Mischvorrichtung vorgelegte Flüssigkeit mittels eines Einlaufventils eingebracht. Der durch das Einlaufventil strömende pulverförmige Stoff tritt über die Sitzöffnung in die Flüssigkeit ein. Die Schließ- oder die Offenstellung des Einlaufventils wird beim Einbringvorgang in Abhängigkeit von den Mischparametern eingestellt. Unter den Mischparameter wird die Zusammensetzung und die Beschaffenheit des pulverförmigen Stoffes, der Durchfluss des pulverförmigen Stoffes im Einlaufventil, der Druck in dem Behälter der Mischvorrichtung im Bereich der Sitzöffnung und/oder die Temperatur der Flüssigkeit verstanden.

Die Zusammensetzung und die Beschaffenheit des pulverförmigen Stoffes bestimmen auch den Durchmesser der Sitzöffnung und damit den Nenndurchmesser des Einlaufventils. Die Steuerung des Einlaufventils, insbesondere die Dauer seiner Offenstellung, bestimmt sich aus dem Vorhandensein oder Nichtvorhandensein des pulverförmigen Stoffes insbesondere im Zulaufbereich des Einlaufventils. Wenn hier kein Durchfluss mehr festgestellt wird, muss ein Luftsaugen über das Einlaufventil in den Behälter hinein vermieden und das Einlaufventil muss über die Steuereinrichtung in seine Schließstellung überführt werden.

Erfindungsgemäß wird das Verfahren zur Einbringung eines pulverförmigen Stoffes in eine Flüssigkeit unter Verwendung einer erfindungsgemäßen Vorrichtung und mit wenigstens einem der genannten Verfahrensschritte des Anspruchs 6 durchgeführt.

Für das erfindungsgemäße Verfahren nach Anspruch 6 und dessen vorteilhafte Weiterbildung nach Anspruch 7 gelten alle die für das erfindungsgemäße Einlaufventil und die erfindungsgemäße Vorrichtung aufgeführten Merkmale und Vorteile in analoger Weise.

Weitere Merkmale und Vorteile der vorliegenden Erfindung ergeben sich aus der nachfolgenden Beschreibung in Verbindung mit den Figuren der Zeichnung.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen realisiert ist, wird in der Zeichnung ein bevorzugtes Ausführungsbeispiel einer Mischvorrichtung zur Einbringung eines pulverförmigen Stoffes in eine Flüssigkeit mittels eines erfindungsgemäßen Einlaufventils beschrieben. Darüber hinaus wird ein Verfahren angegeben, das mit dem Einlaufventil in Verbindung mit der Mischvorrichtung durchführbar ist. Es zeigen
- **Figur 1**: in schematischer Darstellung eine Mischvorrichtung mit einem Einlaufventil in Verbindung mit einer Steuereinrichtung;
- **Figur 1a**: in vergrößerter Darstellung einen in Figur 1 mit "**A**" gekennzeichneten Ausschnitt im Bereich des Einlaufventils und des angrenzenden Wandbereichs eines Behälters der Mischvorrichtung;
- **Figur 1b**: in nochmals vergrößerter Darstellung einen in **Figur 1a** mit **"B"** gekennzeichneten zweiten Ausschnitt aus dem ersten Ausschnitt gemäß **Figur 1a****;**
- **Figur 2**: in perspektivischer Darstellung und im Halbschnitt das Einlaufventil gemäß den **Figuren 1** und **1a** ohne ein Steuerkopfgehäuse und
- **Figur 3**: in perspektivischer Darstellung das Einlaufventil gemäß **Figur 2****,** wobei gegenüber **Figur 2** zusätzlich das Steuerkopfgehäuse dargestellt ist.

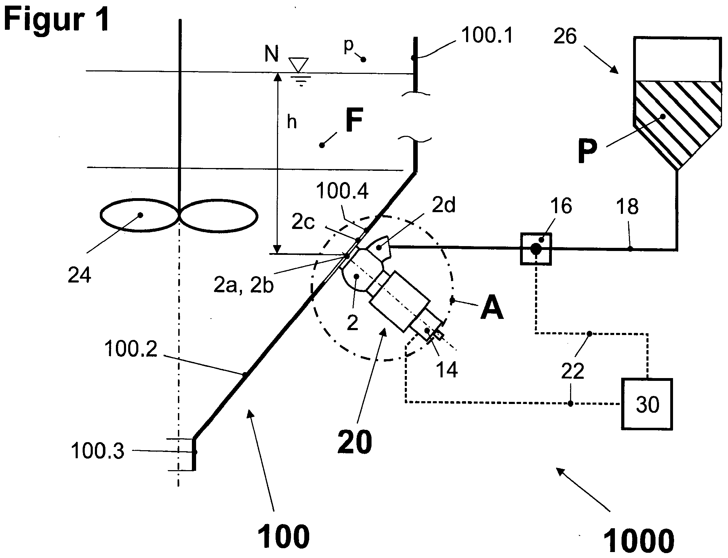

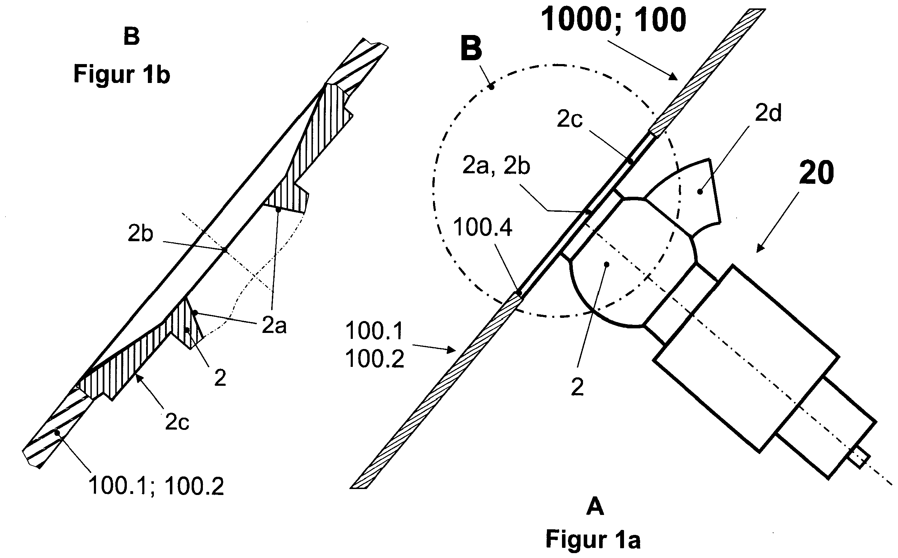

Eine Mischvorrichtung 1000 (**Figur 1**) weist unter anderem einen Behälter 100 auf, der aus einem vorzugsweise zylindrischen Behältermantel 100.1 und einem nicht dargestellten oberen Behälterboden und einem unteren Behälterboden 100.2 besteht. Der untere Behälterboden 100.2 verjüngt sich vorzugsweise nach unten, meist kegelförmig oder in Form eines Kreiskegels, und weist am unteren Ende einen Auslaufstutzen 100.3 auf. In dem Behälter 100 ist eine Flüssigkeit F vorgelegt, die ein freies Niveau N ausbildet, über dem im Regelfall bei der in Rede stehenden Mischvorrichtungen 1000 (Vakuummischer) ein Druck p, meist ein Unterdruck gegenüber Atmosphärendruck, herrscht. An dem Behältermantel 100.1 oder Behälterboden 100.2 ist ein Ventilgehäuse 2 eines Einlaufventils 20 angeordnet. Dem Einlaufventil 20, das der Einbringung eines pulverförmigen Stoffes P in die Flüssigkeit F dient, ist eine Steuereinrichtung 30 zugeordnet. Im Behälter 100 befindet sich eine Rühreinrichtung 24, vorzugsweise eine mechanische, die bis in den Bereich des unteren Behälterbodens 100.2 hinabreicht. Die erforderliche Mischwirkung kann auch durch strömungsmechanische Mittel, beispielsweise durch Umpumpen der Flüssigkeit F über eine Kreislaufleitung und tangentialen Eintritt der Flüssigkeit in den Behälter 100, erreicht werden.

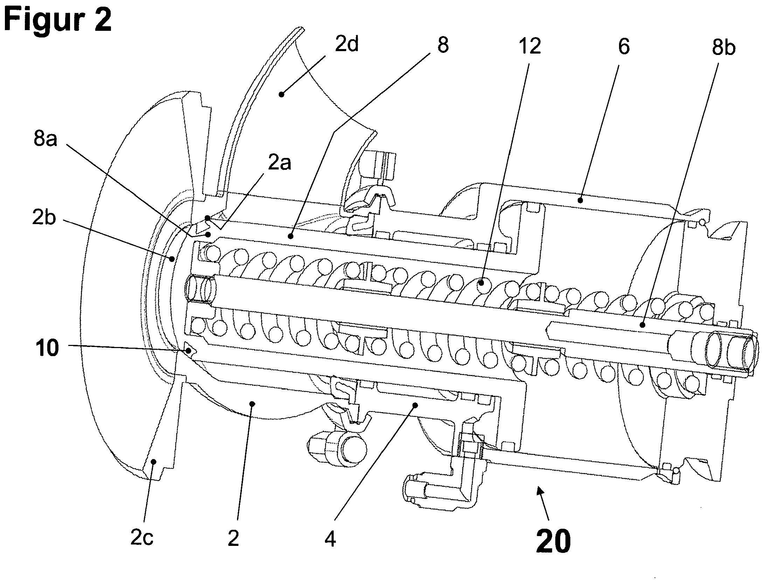

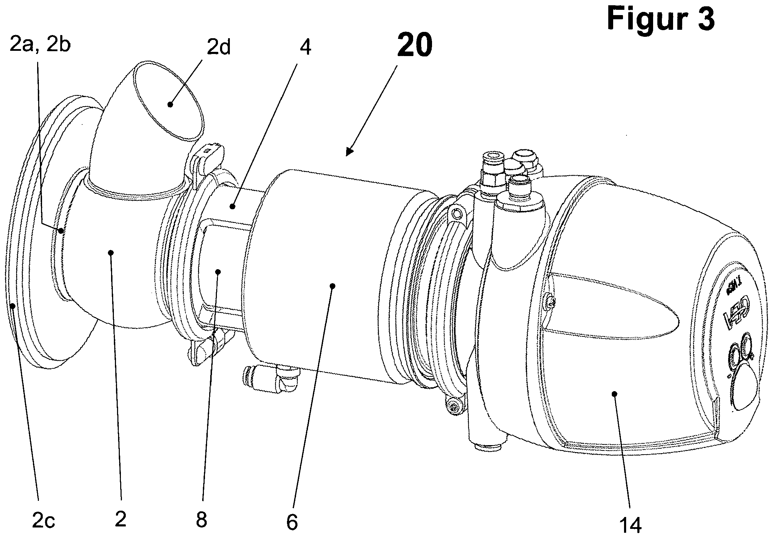

Das Einlaufventil 20 ist erfindungsgemäß als Hubventil ausgebildet ist (**Figuren 2** und **3**). Es weist in seinem Ventilgehäuse 2 einen Ventilsitz 2a und einen mit diesem zusammenwirkenden Ventilteller 8a auf, der an einem Ventilschließglied 8 ausgebildet ist. Im Regelfall nimmt das Ventilschließglied 8 eine Sitzdichtung 10 auf, die in der Schließstellung des Einlaufventils 20 im Zusammenwirken mit dem Ventilsitz 2a die Abdichtung bewirkt. Es sind alternativ auch dichtungslose Sitzkonfigurationen realisierbar, bei denen über die Paarung Metall auf Metall oder Metall gegen ein Ventilschließglied 8 mit dichtenden Eigenschaften, beispielweise ein geeigneter Kunststoff, eine hinreichende Abdichtung erfolgt.

Der Ventilsitz 2a besitzt eine Sitzöffnung 2b, durch welche der pulverförmige Stoff P in die Flüssigkeit F eingebracht wird. Die oberhalb der Anschlussstelle des Einlaufventils 20, angeordnet in der Wandung des Behälters 100, anstehende Flüssigkeit F bildet mit ihrer Flüssigkeitssäule eine Höhe h aus, sodass sich der statische Druck im Bereich der Anschlussstelle und damit der Sitzöffnung 2b aus dem Unterdruck p und dem statischen Druck, der sich aus der Höhe der Flüssigkeitssäule h ergibt, zusammensetzt. Bei einem Vakuummischer mit einem Unterdruck von beispielweise p = 0,2 bis 0,8 bar und einer entsprechend diesem Druckbereich zugeordneten Höhe der Flüssigkeitssäule h = 0,2 bis 4 m herrscht im Bereich der Sitzöffnung 2b stets ein Unterdruck gegenüber Atmosphärendruck, sodass die Sitzöffnung 2b aus dem Behälter 100 heraus besaugt wird.

Die Sitzöffnung 2b ist mit dem Ventilteller 8a zwischen vollständig geschlossen, der Schließstellung, oder vollständig geöffnet, der Offenstellung, einstellbar. Die Sitzöffnung 2b ist erfindungsgemäß in und fluchtend mit einem Erstreckungsbereich einer Wandung des Behältermantels 100.1 oder des Behälterbodens 100.2 angeordnet (**Figuren 1a, 1b**). Das behälterseitige Ende der Sitzöffnung 2b ist senkrecht zur Hubrichtung des Einlaufventils 20 orientiert und schließt in der bestmöglichen Ausführungsform, die in **Figur 1b** nicht dargestellt ist, bündig mit der Innenseite der Wandung des Behältermantels 100.1 oder des Behälterbodens 100.2 ab.

Ein die Sitzöffnung 2b aufnehmender Teil des Ventilgehäuses 2 ist radial außenseits von einem scheibenförmigen Anschlusselement 2c umschlossen, das sich in der Ebene der Sitzöffnung 2b und senkrecht zur Hubrichtung des Einlaufventils 20 erstreckt **(****Figuren 1b****,** **2****,** **3** und **1**). Das Anschlusselement 2c ist in einer Wandöffnung 100.4 des Behälters 100 angeordnet und mit dessen Wandung vorzugsweise stoffschlüssig, vorzugweise durch Schweißung; verbunden. Eine dem Innenraum des Behälters 100 zugewandte Stirnfläche des scheibenförmigen Anschlusselements 2c schließt mit der Innenseite der Wandung des Behältermantels 100.1 oder des Behälterbodens 100.2 bündig und fluchtend ab.

Mit der Steuereinrichtung 30 ist das Ventilschließglied 8 in die Schließ- oder in die Offenstellung überführbar. Die Steuereinrichtung 30 weist wenigstens einen Signalaufnehmer 16 auf (**Figur 1**). Der wenigstens eine Signalaufnehmer 16 ist eine Messeinrichtung für die Mischparameter Zusammensetzung und die Beschaffenheit des pulverförmigen Stoffes P, Durchfluss des pulverförmigen Stoffes P im Einlaufventil 20, Druck in der Mischvorrichtung 1000 im Bereich der Sitzöffnung 2b und/oder Temperatur der Flüssigkeit F. Ein Rohranschluss 2d am Ventilgehäuse 2 ist über eine Zuführleitung 18 mit einem Pulvervorratsbehälter 26 verbunden, in dem für eine vorzugsweise batchweise Einbringung des pulverförmigen Stoffes P in die Flüssigkeit F eine entsprechende Menge vorgehalten wird. Die Messeinrichtung 16 befindet sich in der Zuführleitung 18, vorzugsweise in unmittelbarer Nähe zum Rohranschluss 2d, und sie detektiert hier vorzugsweise den Durchfluss des pulverförmigen Stoffes P. Das Vorhandensein oder Nichtvorhandensein des pulverförmigen Stoffes P führt zu einem entsprechenden Signal, das von der Messeinrichtung 16 über eine Signalleitung 22 an die Steuereinrichtung 30 übermittelt wird. Die Steuereinrichtung 30 übermittelt in Abhängigkeit von dem Signal der Messeinrichtung 16 über eine weitere Signalleitung 22 einen Steuerbefehl an ein Steuerkopfgehäuse 14 des Einlaufventils 20. Die Schließ- oder die Offenstellung des Einlaufventils 20 ist bei der Einbringung in Abhängigkeit von dem vorg. Signal der Messeinrichtung 16 ansteuerbar.

In analoger Weise können zusätzlich oder alternativ weitere Messeinrichtungen vorgesehen werden, die die anderen Mischparameter ermitteln, sodass auch über diese Mischparameter die Schließ- oder die Offenstellung des Einlaufventils 20 ansteuerbar ist.

Das Ventilgehäuse 2 ist über ein Laternengehäuse 4 mit einem Antriebsgehäuse 6 zum Antrieb des Ventilschließgliedes 8 verbunden (**Figuren 2** und **3**). Es handelt sich vorzugsweise um einen druckmittelbeaufschlagten Feder/Kolben-Antrieb, wobei eine Rückstellfeder 12 das Ventilschließglied 8 in seine Schließstellung überführt, wenn der Antrieb nicht mit Druckmittel, vorzugsweise Druckluft, beaufschlagt ist. Eine Ventilstange 8b, die am Ventilteller 8a des Ventilschließgliedes 8 angreift und durch das Antriebsgehäuse 6 hindurch- und bis in das Steuerkopfgehäuse 14 hineingeführt ist, dient antriebsseitig der axialen Führung des Ventilschließgliedes 8.

Aus **Figur 2** ist ersichtlich, dass das Ventilschließglied 8 zumindest in seinem pulverbeaufschlagten Bereich als durchmessergleiche zylindrische Stange ausgebildet ist, an der durchmessergleich der Ventilteller 8a angeformt ist. Durch diese konstruktive Ausgestaltung werden Hohl- und Toträume im Ventilgehäuse 2 im Bewegungsbereich des Ventilschließgliedes 8 vermieden, wobei sich das Ventilschließglied 8 mit seinem endseitigen Ventilteller 8a und der zugeordneten Sitzdichtung 10 weitestgehend aus dem voll durchströmten Bereich des Ventilgehäuses 2 zurückziehen lässt.

Die Vorrichtung, die vorstehend beschriebene Mischvorrichtung 1000, zur Einbringung des pulverförmigen Stoffes P in die Flüssigkeit F weist das vorstehend beschriebene Einlaufventil 20 mit seinen ebenfalls vorstehend beschriebenen Weiterbildungen auf.

Das Verfahren zur Steuerung der Einbringung des pulverförmigen Stoffes P in die Flüssigkeit F sieht vor, dass der pulverförmige Stoff P in die in dem Behälter 100 der Mischvorrichtung 1000 vorgelegte Flüssigkeit F mittels des vorstehend beschriebenen Einlaufventils 20 eingebracht wird. Dabei tritt der durch das Einlaufventil 20 strömende pulverförmige Stoff P über die Sitzöffnung 2b in die Flüssigkeit F ein und die Schließ- oder die Offenstellung des Einlaufventils 20 wird beim Einbringvorgang in Abhängigkeit von den Mischparametern eingestellt. Unter den Mischparameter werden/wird die Zusammensetzung und die Beschaffenheit des pulverförmigen Stoffes P, der Durchfluss des pulverförmigen Stoffes P im Einlaufventil 20, der Druck in dem Behälter 100 der Mischvorrichtung 1000 im Bereich der Sitzöffnung 2b und/oder die Temperatur der Flüssigkeit F verstanden.

### BEZUGSZEICHENLISTE DER VERWENDETEN ABKÜRZUNGEN

- 20: Einlaufventil
- 30: Steuereinrichtung

- 1000: Mischvorrichtung
- 100: Behälter
- 100.1: Behältermantel
- 100.2: Behälterboden (konisch; kegelförmig)
- 100.3: Auslaufstutzen
- 100.4: Wandöffnung

- 2: Ventilgehäuse
- 2a: Ventilsitz
- 2b: Sitzöffnung
- 2c: Anschlusselement
- 2d: Rohranschluss

- 4: Laternengehäuse
- 6: Antriebsgehäuse

- 8: Ventilschließglied
- 8a: Ventilteller
- 8b: Ventilstange

- 10: Sitzdichtung
- 12: Rückstellfeder
- 14: Steuerkopfgehäuse
- 16: Signalaufnehmer
- 18: Zuführleitung
- 22: Signalleitung
- 24: Rühreinrichtung
- 26: Pulvervorratsbehälter
- F: Flüssigkeit
- N: Niveau
- P: pulverförmiger Stoff

- h: Höhe der Flüssigkeitssäule
- p: Druck oberhalb der Flüssigkeitssäule

## Patentansprüche

1. Einlaufventil (20) mit Behälter (100) und Steuereinrichtung (30) zur Einbringung eines pulverförmigen Stoffes (P) in eine in dem Behälter (100) einer Mischvorrichtung (1000) vorgelegte Flüssigkeit (F), das als Hubventil ausgebildet ist,
• mit einem an dem Behälter (100) ausgebildeten Behälterboden (100.2), der sich an einen Behältermantel (100.1) anschließt, einem am Behältermantel (100.1) oder Behälterboden (100.2) angeordneten Ventilgehäuse (2) des Einlaufventils (20) mit einem Ventilschließglied (8),
• mit einem Ventilsitz (2a) im Ventilgehäuse (2),
• mit einem am Ventilschließglied (8) ausgebildeten Ventilteller (8a), der mit dem Ventilsitz (2a) zusammenwirkt,
• mit dem Ventilsitz (2a), der eine Sitzöffnung (2b) ausbildet, durch welche der pulverförmige Stoff (P) in die Flüssigkeit (F) eingebracht wird,
• mit der Sitzöffnung (2b), die mit dem Ventilteller (8a) entweder zwischen vollständig geschlossen, Schließstellung, oder vollständig geöffnet, Offenstellung, einstellbar ist,
• mit dem Ventilschließglied (8), das zumindest in seinem pulverbeaufschlagten Bereich als durchmessergleiche zylindrische Stange ausgebildet ist, an der durchmessergleich der Ventilteller (8a) angeformt ist,
• mit dem Ventilschließglied (8), das mit seinem endseitigen Ventilteller (8a) in der vollen Offenstellung des Einlaufventils (20) aus dem mit dem pulverförmigen Stoff (P) voll durchströmten Bereich des Ventilgehäuses (2) zurückgezogen ist,
• mit der
dem Einlaufventil (20) zugeordneten Steuereinrichtung (30),
• mit der Sitzöffnung (2b), die in und fluchtend mit einem Erstreckungsbereich einer Wandung des Behältermantels (100.1) oder des Behälterbodens (100.2) angeordnet ist,
• mit dem Ventilschließglied (8), das über die Steuereinrichtung (30) in die Schließ- oder in die Offenstellung überführbar ist,
• mit der Steuereinrichtung (30), die wenigstens einen Signalaufnehmer (16) aufweist,
• mit dem wenigstens einen Signalaufnehmer (16), der eine Messeinrichtung ist für die Mischparameter Zusammensetzung und die Beschaffenheit des pulverförmigen Stoffes (P), den Durchfluss des pulverförmigen Stoffes (P) im Einlaufventil (20), den Druck im Behälter (100) im Bereich der Sitzöffnung (2b) und/oder die Temperatur der Flüssigkeit (F),
• wobei die Schließ- oder die Offenstellung des Einlaufventils (20) bei der Einbringung in Abhängigkeit von den Mischparametern ansteuerbar ist.

2. Einlaufventil mit Behälter (100) und Steuereinrichtung (30) nach Anspruch 1, **dadurch gekennzeichnet,**
**dass** das behälterseitige Ende der Sitzöffnung (2b) senkrecht zur Hubrichtung des Einlaufventils (20) orientiert ist und bündig mit der Innenseite der Wandung des Behältermantels (100.1) oder des Behälterbodens (100.2) abschließt.

3. Einlaufventil mit Behälter (100) und Steuereinrichtung (30) nach Anspruch 1 oder 2,
**dadurch gekennzeichnet,**
**dass** ein die Sitzöffnung (2b) aufnehmender Teil des Ventilgehäuses (2) radial außenseits von einem scheibenförmigen Anschlusselement (2c) umschlossen ist, das sich in der Ebene der Sitzöffnung (2b) und senkrecht zur Hubrichtung des Einlaufventils (20) erstreckt.

4. Einlaufventil mit Behälter (100) und Steuereinrichtung (30) nach Anspruch 3, **dadurch gekennzeichnet,**
**dass** eine dem Innenraum des Behälters (100) zugewandte Stirnfläche des scheibenförmigen Anschlusselements (2c) mit der Innenseite der Wandung des Behältermantels (100.1) oder des Behälterbodens (100.2) bündig und fluchtend abschließt.

5. Vorrichtung (1000) zur Einbringung eines pulverförmigen Stoffes (P) in eine Flüssigkeit (F), wobei die Vorrichtung (1000) ein Einlaufventil (20) mit Behälter (100) und Steuereinrichtung (30) nach einem der Ansprüche 1 bis 4 aufweist.

6. Verfahren zur Steuerung der Einbringung eines pulverförmigen Stoffes (P) in eine Flüssigkeit (F), wobei der pulverförmige Stoff (P) in die in einem Behälter (100) einer Mischvorrichtung (1000) vorgelegte Flüssigkeit (F) mittels eines Einlaufventils (20) mit Behälter (100) und Steuereinrichtung (30) nach einem der Ansprüche 1 bis 4 eingebracht wird,
• wobei der durch das Einlaufventil (20) strömende pulverförmige Stoff (P) über die Sitzöffnung (2b) in die Flüssigkeit (F) eintritt,
• wobei die Schließ- oder die Offenstellung des Einlaufventils (20) beim Einbringvorgang in Abhängigkeit von Mischparametern eingestellt wird, und
• wobei unter den Mischparameter die Zusammensetzung und die Beschaffenheit des pulverförmigen Stoffes (P), der Durchfluss des pulverförmigen Stoffes (P) im Einlaufventil (20), der Druck in dem Behälter (100) im Bereich der Sitzöffnung (2b) und/oder die Temperatur der Flüssigkeit (F) verstanden wird.

7. Verfahren zur Einbringung eines pulverförmigen Stoffes in eine Flüssigkeit unter Verwendung einer Vorrichtung nach Anspruch 5 mit den Verfahrensschritten nach Anspruch 6.

## Claims

1. An inlet valve (20) with a container (100) and control apparatus (30) for introducing a powdery substance (P) into a liquid (F) added to the container (100) of a mixing device (1000), said valve being designed as a lifting valve,
• with a container floor (100.2) formed on the container (100) and connected to a container shell (100.1), a valve housing (2) of the inlet valve (20) arranged on the container shell (100.1) or container floor (100.2) and having a valve closing element (8),
• with a valve seat (2a) in the valve housing (2),
• with a valve disc (8a) that is formed on the valve closing element (8) and interacts with the valve seat (2a),
• with the valve seat (2a) that forms a seat opening (2b) through which the powdery substance (P) is introduced into the liquid (F),
• with the seat opening (2b) that can be adjusted with the valve disk (8a) either between a completely closed closed position or completely opened open position,
• with the valve closing element (8) which is configured at least in its region acted upon by powder as a cylindrical rod having the same diameter, on which the valve disk (8a) having the same diameter is molded,
• with the valve closing element (8) whose end valve disk (8a) is withdrawn from the region of the valve housing (2) through which the powdery substance (P) fully flows when the inlet valve (20) is in the completely open position,
• with the control apparatus (30) assigned to the inlet valve (20),
• with the seat opening (2b) that is arranged in, and flush with, a region of extension of a wall of the container shell (100.1) or the container floor (100.2),
• with the valve closing element (8) that can be transferred by the control apparatus (30) into the closed or into the open position,
• with the control apparatus (30) that has at least one signal pickup (16),
• with the at least one signal pickup (16) that is a measuring apparatus for the mixing parameters of the composition and quality of the powdery substance (P), the flow of the powdery substance (P) in the inlet valve (20), the pressure in the container (100) in the region of the seat opening (2b) and/or the temperature of the liquid (F),
• wherein the closed or the open position of the inlet valve (20) can be actuated during introduction depending on the mixing parameters.

2. The inlet valve with a container (100) and control apparatus (30) according to claim 1, **characterized in that**
the container-side end of the seat opening (2b) is oriented perpendicular to the direction of displacement of the inlet valve (20) and terminates flush with the inside of the wall of the container shell (100.1) or the container floor (100.2).

3. The inlet valve with a container (100) and control apparatus (30) according to claim 1 or 2,
**characterized in that**
a part of the valve housing (2) accommodating the seat opening (2b) is enclosed radially to the outside by a disk-shaped connecting element (2c) that extends in the plane of the seat opening (2b) and perpendicular to the direction of displacement of the inlet valve (20).

4. The inlet valve with a container (100) and control apparatus (30) according to claim 3, **characterized in that**
a face of the disk-shaped connecting element (2c) facing the interior of the container (100) terminates flush and in line with the inside of the wall of the container shell (100.1) or the container floor (100.2).

5. A device (1000) for introducing a powdery substance (P) into a liquid (F), wherein the device (1000) has an inlet valve (20) with a container (100) and control apparatus (30) according to one of claims 1 to 4.

6. A method for controlling the introduction of a powdery substance (P) into a liquid (F), wherein the powdery substance (P) is introduced into the liquid (F) added to a container (100) of a mixing device (1000) by means of an inlet valve (20) with a container (100) and control apparatus (30) according to one of claims 1 to 4.
• wherein the powdery substance (P) flowing through the inlet valve (20) enters the liquid (F) through the seat opening (2b),
• wherein the closed or the open position of the inlet valve (20) is adjusted during the introduction process depending on mixing parameters, and
• wherein the mixing parameters are understood to be the composition and quality of the powdery substance (P), the flow of the powdery substance (P) in the inlet valve (20), the pressure in the container (100) in the region of the seat opening (2b) and/or the temperature of the liquid (F).

7. The method for introducing a powdery substance into a liquid using a device according to claim 5 with the method steps according to claim 6.

## Revendications

1. Soupape d'alimentation (20) avec un récipient (100) et un dispositif de commande (30) pour l'introduction d'une substance pulvérulente (P) dans un liquide (F) déposé dans le récipient (100) d'un dispositif mélangeur (1000), laquelle est conçue comme une soupape de levage,
• avec un fond de récipient (100.2) formé sur le récipient (100), lequel se raccorde à une enveloppe de récipient (100.1), un boîtier de soupape (2) de la soupape d'alimentation (20) disposé sur l'enveloppe de récipient (100.1) ou sur le fond de récipient (100.2), avec un organe de fermeture de soupape (8),
• avec un siège de soupape (2a) dans le boîtier de soupape (2),
• avec une tête de soupape (8a) formée sur l'organe de fermeture de soupape (8), laquelle coopère avec le siège de soupape (2a),
• avec le siège de soupape (2a) formant un orifice de siège (2b), à travers laquelle la substance pulvérulente (P) est introduite dans le liquide (F),
• avec l'orifice de siège (2b) réglable avec la tête de soupape (8a) entre une position de fermeture complètement fermée et une position d'ouverture complètement ouverte,
• avec l'organe de fermeture de soupape (8) conçu, au moins dans sa région soumise à la poudre, comme une tige cylindrique de diamètre égal, sur laquelle est formée la tête de soupape (8a) avec un diamètre égal,
• avec l'organe de fermeture de soupape (8) retiré avec sa tête de soupape (8a) côté extrémité hors de la région du boîtier de soupape (2) entièrement traversée par la substance pulvérulente (P) dans la position d'ouverture complète de la soupape d'alimentation (20),
• avec le dispositif de commande (30) attribué à la soupape d'alimentation (20),
• avec l'orifice de siège (2b) disposé dans une région d'extension d'une paroi de l'enveloppe de récipient (100.1) ou du fond de récipient (100.2) et en alignement avec celle-ci,
• avec l'organe de fermeture de soupape (8) pouvant être transféré dans la position de fermeture ou d'ouverture par le biais du dispositif de commande (30),
• avec le dispositif de commande (30) présentant au moins un capteur de signal (16),
• avec l'au moins un capteur de signal (16) consistant en un dispositif de mesure pour les paramètres de mélange tels que la composition et la nature de la substance pulvérulente (P), le débit de la substance pulvérulente (P) dans la soupape d'alimentation (20), la pression dans le récipient (100) dans la région de l'orifice de siège (2b) et/ou la température du liquide (F),
• dans laquelle la position de fermeture ou d'ouverture de la soupape d'alimentation (20) lors de l'introduction peut être commandée en fonction des paramètres de mélange.

2. Soupape d'alimentation avec un récipient (100) et un dispositif de commande (30) selon la revendication 1, **caractérisée en ce que**
l'extrémité côté récipient de l'orifice de siège (2b) est orientée perpendiculairement à la direction de levage de la soupape d'alimentation (20) et se termine à fleur avec le côté intérieur de la paroi de l'enveloppe de récipient (100.1) ou du fond de récipient (100.2).

3. Soupape d'alimentation avec un récipient (100) et un dispositif de commande (30) selon la revendication 1 ou 2, **caractérisée en ce que**
une partie du boîtier de soupape (2) recevant l'orifice de siège (2b) est entourée radialement du côté extérieur par un élément de raccordement en forme de disque (2c), lequel s'étend dans le plan de l'orifice de siège (2b) et perpendiculairement à la direction de levage de la soupape d'alimentation (20).

4. Soupape d'alimentation avec un récipient (100) et un dispositif de commande (30) selon la revendication 3, **caractérisée en ce que**
une surface frontale de l'élément de raccordement en forme de disque (2c) tournée vers l'espace intérieur du récipient (100) se termine à fleur et en alignement avec le côté intérieur de la paroi de l'enveloppe de récipient (100.1) ou du fond de récipient (100.2).

5. Système (1000) destiné à l'introduction d'une substance pulvérulente (P) dans un liquide (F), dans lequel le système (1000) présente une soupape d'alimentation (20) avec un récipient (100) et un dispositif de commande (30) selon l'une des revendications 1 à 4.

6. Procédé de commande pour l'introduction d'une substance pulvérulente (P) dans un liquide (F), dans lequel la substance pulvérulente (P) est introduite dans le liquide (F) déposé dans un récipient (100) d'un dispositif mélangeur (1000) au moyen d'une soupape d'alimentation (20) avec un récipient (100) et un dispositif de commande (30) selon l'une des revendications 1 à 4,
• dans lequel la substance pulvérulente (P) traversant la soupape d'alimentation (20) pénètre dans le liquide (F) par l'orifice de siège (2b),
• dans lequel la position de fermeture ou d'ouverture de la soupape d'alimentation (20) pendant l'opération d'introduction est réglée en fonction de paramètres de mélange, et
• dans lequel les paramètres de mélange comprennent la composition et la nature de la substance pulvérulente (P), le débit de la substance pulvérulente (P) dans la soupape d'alimentation (20), la pression dans le récipient (100) dans la région de l'orifice de siège (2b) et/ou la température du liquide (F).

7. Procédé destiné à l'introduction d'une substance pulvérulente dans un liquide à l'aide d'un système selon la revendication 5, avec les étapes de procédé selon la revendication 6.
